# EUROPÄISCHE PATENTSCHRIFT

(11) **EP 2 550 454 B1**
(45) Veröffentlichungstag und Bekanntmachung des Hinweises auf die Patenterteilung: **24.01.2018**
(21) Anmeldenummer: 11710736.7
(22) Anmeldetag: 21.03.2011
(51) Int. Cl.: F04B 49/02, F04B 49/06, H02P 6/00

(54) **VERFAHREN ZUM REGELN EINER DOSIERPUMPE**
METHOD FOR CONTROLLING A DOSING PUMP
PROCÉDÉ DE COMMANDE D'UNE POMPE DOSEUSE

(30) Priorität: 24.03.2010 DE 102010003218
(43) Veröffentlichungstag der Anmeldung: 30.01.2013
(73) Patentinhaber: ProMinent GmbH, 69123 Heidelberg (DE)
(72) Erfinder: FREUDENBERGER, Thomas, 67069 Ludwigshafen (DE); DREXLMEIER, Yves, 67071 Ludwigshafen (DE)
(74) Vertreter: WSL Patentanwälte Partnerschaft mbB
(86) Internationale Anmeldenummer: PCT/EP2011/054264
(87) Internationale Veröffentlichungsnummer: WO 2011/117199

(56) Entgegenhaltungen:
- EP-A1- 0 025 575
- WO-A1-2007/058579
- DE-U1-202005 013 090
- US-A- 5 280 222
- US-E- R E29 495

## Beschreibung

Die vorliegende Erfindung betrifft ein Verfahren zum Regeln einer Dosierpumpe. Eine Dosierpumpe weist im allgemeinen einen Antriebsmotor mit einer vom Motor angetriebenen Welle und ein in einem Dosierkopf angeordnetes Verdrängungsorgan auf. Dabei wird die Drehbewegung der Welle in eine oszillierende Bewegung des Verdrängungsorgans umgesetzt, so dass das Verdrängungsorgan in Zusammenwirken mit einem Auslass- und Einlaßventil in abwechselnder Folge zu einem Pumphub (Druckhub) und einem Ansaughub (Saughub) und damit zu einer Förderung eines Dosiermediums führt.

Diese Dosierpumpen arbeiten nach dem volumetrischen Prinzip, d. h., der Dosiervorgang wird durch Verdrängen eines abgeschlossenen Kammervolumens mit Hilfe eines Verdrängungsorgans durchgeführt. Das Dosiervolumen pro Hub wird durch das Produkt aus dem Hub und der wirksamen Fläche des Verdrängungsorgans bestimmt.

Bei einer solchen Dosierpumpe wird die im Allgemeinen kontinuierliche Drehbewegung eines Antriebsmotors durch eine Getriebeeinheit in eine oszillierende Bewegung des Verdrängungsorgans umgewandelt. Der Antrieb des Verdrängungsorgans kann zwangsgeführt oder auch einseitig formschlüssig nur bei Druckhub erfolgen. Im letzteren Fall müssen Maßnahmen vorgesehen sein, die das Verdrängungsorgan wieder zurückbewegen. Dies kann beispielsweise durch eine entsprechende Rückholfeder erfolgen.

Die üblichen Dosierpumpen sind in der Regel leistungsfähig und weisen für die meisten Anwendungen ausreichende Dosiereigenschaften auf.

Im einfachsten Fall wird der Antriebsmotor für eine fortlaufende Dosierung kontinuierlich oder zum Ausführen einzelner Dosierhübe für eine bestimmte Zeit eingeschaltet. Die Motordrehzahl wird durch die elektrische Frequenz der Netzspannung oder der Motoransteuerung vorgegeben und bestimmt daher zusammen mit der entsprechenden Getriebeuntersetzung und der Getriebecharakteristik, die beispielsweise bei einem Exzentergetriebe sinusförmig ist, die Zeitdauer eines jeden Hubs. Bei einem kontinuierlichen Betrieb errechnet sich die Zeitdauer pro Hub aus der effektiven Motordrehzahl im Belastungszustand und der Getriebeuntersetzung. Wird der Antriebsmotor ein- oder ausgeschaltet, um Einzelhübe oder Teilhübe durchzuführen, müssen entsprechende Anlauf- und Bremszeiten berücksichtigt werden, die die Zeitdauer pro Hub entsprechend verlängern. Die Hublänge kann beispielsweise durch Verstellen der Exzentrizität eines Exzentergetriebes oder durch Verwenden eines verstellbaren Anschlages, eingestellt werden, der Anschlag kann beispielsweise die Bewegung des Verdrängungsorgans im Saughub vor Erreichen des hinteren Totpunktes das Exzentergetriebes begrenzen. Dadurch wird der Startpunkt der Hubbewegung vorgegeben, während sich der Endpunkt aus der vollständig ausgeführten Auslenkbewegung des Verdrängungsorgans ergibt.

Der Bewegungsablauf des Verdrängungsorgans ergibt sich aus dem Zusammenspiel der mechanischen Komponenten, wie z. B. dem Getriebe. Während der Vorwärtsbewegung (Druckhub) arbeitet der Antrieb gegen die durch das Verdrängungsorgan (und die gegebenenfalls vorhandene Rückholfeder) auf die Schubstange wirkende Kraft.

Es gibt Ausführungsformen, sogenannte Membrandosierpumpen, die als Verdrängungsorgan eine zumindest teilweise flexible Membran verwenden. Diese Membran kann sich während des Druck- und Saughubs verformen. Der Betrag dieser Verformung, die in einem ersten, für die Dosierung ungenutzten Teil der Hubbewegung aufgebaut wird, geht der effektiv ausgeführten Hubbewegung verloren und führt dazu, dass die Dosiermenge bei zunehmendem Arbeitsdruck abnimmt. Bei diesen Pumpen ist es daher notwendig, eine entsprechende Kalibriermessung durchzuführen. Nach erfolgter Kalibrierung kann die Pumpe jedoch nur in einem bestimmten Arbeitsdruckbereich zuverlässig verwendet werden. Sollte sich der Arbeitsdruck ändern, so muss neu kalibriert werden. Unterbleibt die Kalibrierung, z. B. weil die Arbeitsdruckschwankung nicht bemerkt wird, so ergibt sich ein Dosierfehler.

Zur besseren Einstellung des Dosiervorgangs und zur Erhöhung der Dosiergenauigkeit ist in der EP 1 754 891 bereits vorgeschlagen worden, das Verdrängungsorgan mit einem Bezugselement zu verbinden, dessen Position von einem Positionssensor abgetastet wird, wobei der Positionssensor ein Ist-Signal abgibt, welches zur Position des Bezugselementes und damit des Verdrängungsorgans in einer festen Beziehung steht und mit dessen Hilfe Kenntnis über den Bewegungsablauf des Verdrängungsorgans gewonnen wird, so dass die elektronische Steuerung der Dosierpumpe auf Betriebszustände des Dosierkreises und der Pumpe reagieren kann.

In den Veröffentlichungen DE 197 38 064 A1, DE 103 22 868 A1, DE 101 62 773 A1 und DE 298 21 910 U1 sind ebenfalls Dosierpumpen und deren Regelverfahren beschrieben.

Vor dem Hintergrund des beschriebenen Standes der Technik ist es daher Aufgabe der vorliegenden Erfindung, ein Verfahren zum Regeln einer Dosierpumpe anzugeben, das prinzipiell ohne Positionssensor an der Schubstange auskommt und das Dosierverhalten der Pumpe mit hoher Präzision festlegen kann.

Erfindungsgemäß wird diese Aufgabe durch ein Verfahren zum Regeln einer Dosierpumpe gemäß Anspruch 1 gelöst. Es ist beispielsweise möglich, als Regelgröße das Ist-Drehmoment M_{IST} und gegebenenfalls den magnetischen Ist-Fluss Φ_{IST} des Motors, vorzugsweise eines Asynchronmotors, zu berechnen und mit einer vorbestimmten Soll-Führungsgröße, d. h. dem Soll-Drehmoment und dem Soll-Fluss des Motors zu vergleichen. In Abhängigkeit von dem Ergebnis des Vergleiches kann ein Vergleichssignal ausgegeben werden. Dieses kann beispielsweise als Statussignal verwendet werden, d. h., das Signal zeigt an, ob eine bestimmte Bedingung erfüllt ist oder nicht. Das Statussignal kann dann z. B. als Warnsignal oder als Auslöser für bestimmte Maßnahmen dienen. Das Signal wird als Regelsignal verwendet. Je nach Regelgröße sind zur Berechnung nicht nur Motorbetriebsgrößen, wie z. B. die Motorspannung und der Motorstrom, notwendig, sondern weitere für den Motor bzw. das Getriebe charakteristische Eigenschaften, wie z. B. das Übersetzungs- oder Untersetzungsverhältnis.

In einer weiteren bevorzugten Ausführungsform ist vorgesehen, dass als Regelgröße die Ist-Motordrehzahl, vorzugsweise mehrmals, besonders bevorzugt mindestens fünfmal während einer Motorumdrehung, gemessen oder aus den Motorbetriebsgrößen, vorzugsweise aus dem Ist-Drehmoment M_{IST} und dem magnetischen Ist-Fluss Φ_{IST} des Motors, berechnet wird und die Differenz zwischen der Ist-Motordrehzahl und einer vorbestimmten Soll-Motordrehzahl als Vergleichssignal ausgegeben wird und das Vergleichssignal als Regelsignal zur Anpassung von Motorstrom I und/oder Motorspannung U verwendet wird, um die Ist-Motordrehzahl an die Soll-Motordrehzahl anzugleichen.

Im einfachsten Fall erfolgt die Messung der Ist-Motordrehzahl mit Hilfe eines Drehwinkelgebers. Es ist aber auch möglich, die Ist-Motordrehzahl völlig berührungslos aus den Motorbetriebsgrößen zu berechnen.

Abhängig von der Getriebekonfiguration variiert die Motorlast in Abhängigkeit von der aktuellen Exzenterstellung. Der Motor muss daher mit seiner Leistung derart ausgelegt sein, dass er die gewünschte Drehzahl auch bei der ungünstigsten Exzenterstellung aufbringen kann. Ist die Leistung des Motors zu gering ausgelegt, so führt dies dazu, dass die gewünschte Drehzahl in manchen Exzenterstellungen nicht erreicht wird, d. h. die Hubdauer verlängert wird. Durch die angegebene Maßnahme kann die Leistung des Motors besser ausgenutzt werden, da die Drehzahl im Bereich maximaler Exzenterauslenkung, in dem die Kraftübertragung am ungünstigsten ist, leicht verringert wird, während die daraus resultierende Verlängerung der Hubdauer kompensiert wird, indem die Drehzahl in einem Bereich mit günstiger Kraftübertragung erhöht wird.

In einer weiteren bevorzugten Ausführungsform ist vorgesehen, dass als Regelgröße die Ist-Motormagnetisierung, vorzugsweise mehrmals, besonders bevorzugt mindestens fünfmal während einer Motorumdrehung, aus dem Ist-Drehmoment M_{IST} und gegebenenfalls weiteren bekannten Motorcharakteristiken berechnet wird und als Führungsgröße eine vorbestimmte Soll-Motormagnetisierung gewählt wird und die Differenz zwischen der Regelgröße und der Führungsgröße als Vergleichssignal ausgegeben wird und das Vergleichssignal als Regelsignal zur Anpassung von Motorstrom I und/oder Motorspannung U verwendet wird, um die Ist-Motormagnetisierung an die Soll-Motormagnetisierung anzugleichen. Dabei ist vorzugsweise die Soll-Motormagnetisierung eine periodische Funktion mit einer Periodendauer, die der Periodendauer des Verdrängungsorgans entspricht.

Vorzugsweise ist ein Druckelement vorgesehen, welches die Kontaktfläche in Richtung des Exzenters drückt, so dass beim Drehen der Welle das Druckelement die Kontaktfläche zumindest abschnittsweise in Kontakt mit dem Exzenter gehalten und ein Ansaughub durchgeführt werden kann. Das Druckelement kann beispielsweise eine Feder sein.

In einer weiteren bevorzugten Ausführungsform wird als Regelgröße das Ist-Drehmoment M_{IST} und gegebenenfalls der magnetische Ist-Fluss Φ_{IST} des Motors, vorzugsweise eines Asynchronmotors berechnet, und das Ist-Drehmoment M_{IST} und gegebenenfalls der magnetische Ist-Fluss Φ_{IST} wird über mindestens eine Periodendauer im Wesentlichen kontinuierlich bestimmt und das so berechnete zeitabhängige Ist-Drehmoment M_{IST} und gegebenenfalls der zeitabhängige magnetische Ist-Fluss Φ_{IST} des Motors mit mindestens einer vorbestimmten Musterfunktion als Führungsgröße verglichen. Das Vergleichssignal repräsentiert den Grad der Ähnlichkeit zwischen der Regelgröße und der Führungsgröße und wenn der Grad der Ähnlichkeit einen vorbestimmten Wert übersteigt, wird das Vergleichssignal als Statussignal verwendet. Beispielsweise kann in Reaktion auf das Statussignal eine Überlastungs-Schutzfunktion, z. B. in Form einer Überdruckabschaltung, aufgerufen werden.

Üblicherweise zeigt eine Dosierpumpe im Laufe der Zeit Verschleißerscheinungen. Dies können beispielsweise Lagerschäden, ausgeschlagene Zahnräder oder ein beschädigter Exzenter sein. Solche Verschleißerscheinungen sorgen dafür, dass die durch den Motor aufzubringende Kraft sich ändert. Erfindungsgemäß ist daher vorgesehen, bestimmten Verschleißerscheinungen charakteristische Störungsmuster bzw. eine Musterfunktion zuzuordnen. Fehlt beispielsweise einem Zahnrad ein Zahn, so wird sich der fehlende Zahn in einer periodischen Störung des Kraftverlaufes niederschlagen. Berechnet man nun das Ist-Drehmoment im Wesentlichen kontinuierlich und vergleicht das so berechnete Signal mit den Musterfunktionen, beispielsweise durch Bildung einer entsprechenden Kreuzkorrelationsfunktion, so kann sehr früh erkannt werden, dass die Dosierpumpe Verschleißerscheinungen zeigt und gegebenenfalls allein aufgrund des Kraftverlaufes bestimmt werden, welches Bauteil Verschleißerscheinungen zeigt und dieses dann gezielt ausgetauscht werden kann.

Weiterhin kann es passieren, dass Luft in den Dosierkopf gelangt, was die gesamte Dosierung zum Erliegen bringen kann, obgleich die mechanische Bewegung des Verdrängerorgans noch ausgeführt wird. Auch hier kann durch Auswerten des Ist-Drehmoments der Kompressionsverlauf, d.h. der Kraftanstieg, ausgewertet werden und, falls der Kompressionsverlauf auf eine Belüftung des Dosierkopfes hinweist, beispielsweise eine entsprechende Meldung erstellt werden oder es können automatisch Gegenmaßnahmen eingeleitet werden, wie z. B. eine automatisierte Entlüftung des Dosierkopfes.

In einer weiteren bevorzugten Ausführungsform ist vorgesehen, dass der Motor ein Verdrängungsorgan mit einer zumindest teilweise elastischen Membran aufweist, wobei als Regelgröße die Dosiermenge aus dem Ist-Drehmoment M_{IST} und gegebenenfalls dem magnetischen Ist-Fluss Φ_{IST} des Motors unter Berücksichtigung weiterer Motorcharakteristiken berechnet wird, wobei der aufgrund der Durchbiegung der elastischen Membran zu erwartende Einfluss auf die Dosiermenge berücksichtigt wird und die Differenz zwischen der Ist-Dosiermenge und einer vorbestimmten Soll-Dosiermenge als Vergleichssignal ausgegeben wird und als Regelsignal zu Anpassung von Motorstrom I und/oder Motorspannung U verwendet wird, um die Ist-Dosiermenge an die Soll-Dosiermenge anzugleichen.

Durch diese Maßnahme kann die Dosierpumpe über einen großen Bereich von unterschiedlichen Arbeitsdrücken verwendet werden, ohne dass es zu einem nennenswerten Dosierfehler kommt. Kommt es nämlich zu einer unerwarteten Änderung des Arbeitsdruckes, so erlaubt das erfindungsgemäße Verfahren über die Berechnung des Ist-Drehmomentes eine zuverlässige Erkennung und eine Korrektur des Dosierfehlers aufgrund der Durchbiegung der Membran des Verdrängungsorgans.

Weiterhin ist in einer bevorzugten Ausführungsform vorgesehen, dass als Regelgröße eine Ist-Hublänge des Verdrängungsorgans aus dem Ist-Drehmoment M_{IST} und gegebenenfalls dem magnetischen Ist-Fluss Φ_{IST} des Motors berechnet wird und die Differenz zwischen der Ist-Hublänge und einer vorbestimmten Soll-Hublänge als Vergleichssignal ausgegeben wird. Das Vergleichssignal kann entweder als Statussignal verwendet werden, um gegebenenfalls die Pumpe zu stoppen oder als Regelsignal zur Anpassung von Motorstrom I und/oder Motorspannung U verwendet werden, um die Ist-Hublänge an die Soll-Hublänge anzugleichen. Durch diese Maßnahme kann die Hublänge dem laufenden Betrieb angepasst werden, sofern dies für den Einsatzbereich notwendig ist.

Die vorliegende Erfindung betrifft ebenfalls eine Dosierpumpe mit einer Regelvorrichtung zur Durchführung des beschriebenen Verfahrens. Durch das beschriebene Verfahren kann die Dosierpumpe auch im Pendelhubbetrieb verwendet werden, d.h. dass nach höchstens einem Pump- und einem Ansaughub die Motordrehrichtung invertiert wird.

Weitere Vorteile, Merkmale und Anwendungsmöglichkeiten werden deutlich anhand der folgenden Beschreibung einer bevorzugten Ausführungsform und der dazugehörigen Figuren. Es zeigen:
Figur 1 eine perspektivische Längsschnittansicht durch eine Dosierpumpe,
Figur 2 eine schematische Ansicht der Motorpumpe,
Figur 3a eine schematische Darstellung des Drehmomentes des Motors und der Verdrängerbewegung während eines Umlaufs für einen vollen Hub,
Figur 3b eine schematische Darstellung des Drehmomentes des Motors und der Verdrängerbewegung während eines Umlaufs für einen Teilhub,
Figur 4a eine schematische Darstellung des Drehmomentes des Motors und der Verdrängerbewegung während eines Umlaufs für einen vollen Hub mit unvollständigem Saughub,
Figur 4b eine schematische Darstellung des Drehmomentes des Motors und der Verdrängerbewegung während eines Umlaufs für einen Teilhub mit unvollständigem Saughub,
Figur 5 eine schematische Darstellung der Drehzahl und des Drehmomentes über der Zeit für bekannte Motoren (durchgezogene Linie) und für einen entsprechend einer bevorzugten Ausführungsform geregelten Motor (gestrichelte Line).

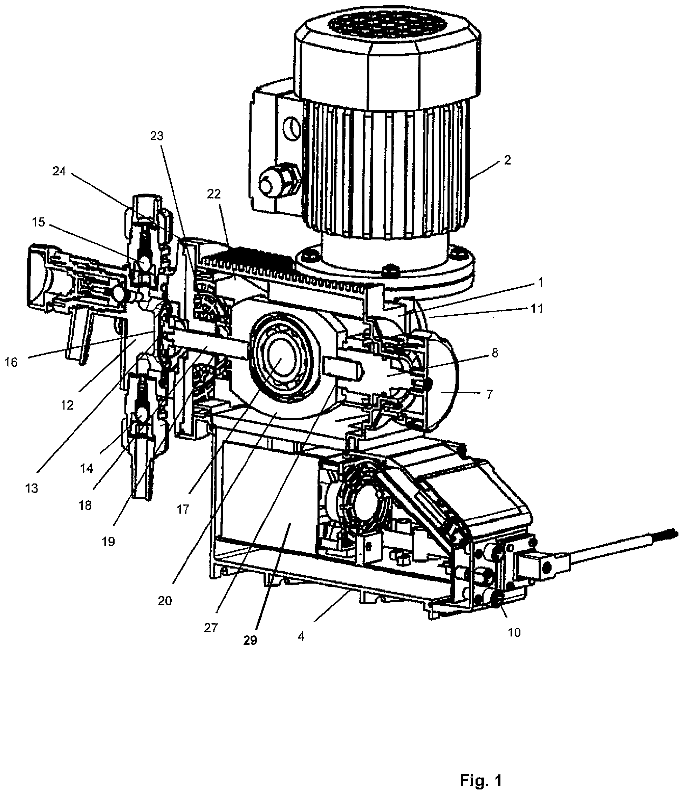

Figur 1 zeigt den Aufbau einer Dosierpumpe. Die Dosierpumpe besteht im Wesentlichen aus drei Komponenten, nämlich dem Antriebsmotor 2 mit Getriebeeinheit, dem Exzenterantrieb im Exzentergehäuse 1 und dem Elektronikgehäuse 29 mit der darin enthaltenen elektronischen Steuerung und den dort eingesetzten elektronischen Baugruppen und Bauteilen. Das Elektronikgehäuse 29 weist auf der Unterseite eine Bodenplatte 4 mit Befestigungsbohrungen auf, das Exzentergehäuse 1, das auf das Elektronikgehäuse 29 aufgesetzt und mit diesem fest verbunden ist, trägt den Antriebsmotor 2 mit Getriebeeinheit, der beispielsweise über Schrauben mit dem Exzentergehäuse verbunden ist.

An dem vom Exzentergehäuse 1 und Elektronikgehäuse 29 gebildeten Gehäuse sind im oberen Teil die Komponenten des Exzenterantriebs befestigt. Die Komponenten des Exzenterantriebs sind in einem Exzenterträger 22 gelagert, der die Lageabstimmung der Einzelteile zueinander sicherstellt und im Exzentergehäuse 1 befestigt ist. Ein Dreiphasen-Asynchronmotor 2 ist zusammen mit einem Untersetzungsgetriebe 11, welches als Winkelgetriebe ausgeführt ist, als Baueinheit von Aussen an das Exzentergehäuse 1 angeflanscht und mit Schrauben verbunden. Die Abtriebswelle des Getriebemotors bildet einen rechten Winkel zur Wellenachse des Motors und bildet entweder direkt die Antriebswelle des Exzenterantriebes oder ist wie im gezeigten Ausführungsbeispiel mit dieser über eine Kopplung achsgleich verbunden. Die Antriebswelle des Exzenterantriebs, die Exzenterwelle 17, ist im Exzenterträger 22 drehbar gelagert und trägt als fest mit ihr verbundenen Teil einen Exzenter. Die Exzenterwelle durchdringt mit dem Exzenter einen entsprechende ausgeschnittenen Schubbügel 20. Die Exzenterwelle 17 wird durch die Motor-/Getriebeeinheit über die Wellenkupplung bei angesteuertem Motor 2 in Drehung versetzt und treibt weiter den Schubbügel 20 in einer Innenfläche seines Ausschnitts, nämlich der Anlauffläche, mit der Außenfläche des Exzenters an. Der Schubbügel 20 treibt eine fest mit ihm verbundene, im Beispiel eingespritzte Schubstange 19 an. Die Einheit aus Schubbügel 20 und Schubstange 19 ist längs verschiebbar in zwei Gleitbuchsen gelagert. Die Achse der Exzenterwelle 17 sowie die Längsachse 18 des Schubbügels 20 sowie der Schubstange 19 liegen jeweils in der horizontalen Ebene und bilden einen rechten Winkel zueinander. Eine der beiden Gleitbuchsen 26 für die Schubstange 19 sitzt in einer Lagescheibe 24, die druckkopfseitig am Exzenterträger 22 befestigt ist. Eine weitere Gleitbuchse 27, die den von der Dosierkopfseite abgewendeten Zapfen des Schubbügels 20 aufnimmt, sitzt im Hubverstellbolzen 8. Achsgleich zur Längsachse 18 der Schubstange 19 ist ein per Hand zu betätigendes Verstellorgan 7 für die Verstellung des Hubverstellbolzens 8 in ein Gewinde des Exzenterträgers 22 eingeschraubt, das die Axialbewegung des Schubbügels 20 beim Ansaugen und damit dem Hub der Dosierpumpe begrenzt.

Das Gehäuse enthält weiter in seinem unteren Teil in einem abgeschlossenen Raum, dem Elektronikgehäuse 29, die elektronische Steuerung.

Auf der den Steuerleitungen 10 gegenüberliegenden Seite ist achsgleich zur Längsachse 18 der Schubstange ein Dosierkopf 12 angeordnet, in dem als Verdrängungsorgan eine z. B. aus Kunststoff gefertigte Membran 13 arbeitet, die an ihrem Umfang fest eingespannt ist. Der Dosierkopf 12 trägt weiterhin ein Einlaßventil 14 und ein Auslaßventil 15, um das zwischen Membran 13 und Dosierkopf 12 in dem Dosierraum 16 über das Einlaßventil 14 angesaugte Dosiermedium über das Auslaßventil 15 in die Dosierleitung zu drücken. Die Dosierpumpe arbeitet nach dem volumetrischen Prinzip, d.h. ein vorgegebenes Volumen soll bei jedem Hub einerseits angesaugt und andererseits über das Auslaßventil 15 ausgestoßen werden. Die Membran 13 wird mittels des Exzenterantriebs, der die Schubstange 19 in der Längsachse hin- und herbewegt, in eine oszillierende Bewegung versetzt. Zwischen dem Schubbügel 20 und einem Bund der Lagescheibe 24 ist eine Druckfeder 23, z. B. eine Spiralfeder, angeordnet, die den Schubbügel 20 zu jedem Zeitpunkt formschlüssig am Exzenter anlegt. In der vorlaufenden Phase der Exzenterbewegung, also der Bewegung der Schubstange zum Dosierkopf hin, wird der Schubbügel mit der Schubstange zur Druckfeder hinbewegt, gleichzeitig wird die Membran 13 in den Dosierraum 16 gedrückt, was zur Folge hat, dass im Dosierraum ein Überdruck entsteht, das Auslaßventil 15 sich öffnet und das Dosiermedium in die Dosierleitung gedrückt wird. In der zurücklaufenden Phase der Exzenterbewegung, also der Bewegung der Schubstange weg vom Dosierkopf, wird der Schubbügel 20 durch die zusammengedrückte Druckfeder 23, die z. B. als Spiralfeder ausgebildet sein kann, der Exzenterbewegung folgend in die entgegengesetzte Richtung zum Hubverstellbolzen 8 bewegt, was zur Folge hat, dass die mit der Membran 13 verbundene Schubstange 19 die Membran in ihrer Bewegung mitnimmt, wodurch im Dosierraum 16 ein Unterdruck entsteht, der das Einlaßventil 14 öffnet, so daß ein weiteres Mal Dosiermedium in den Dosierraum eingesaugt werden kann.

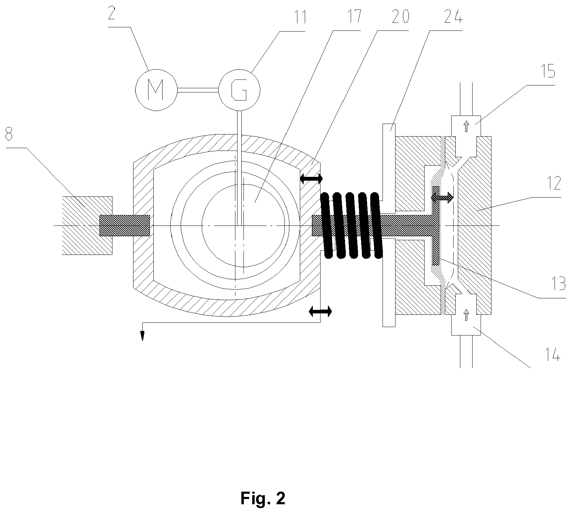

In Figur 2 ist eine schematische Darstellung der Dosierpumpe gezeigt. Bei der gezeigten Ausführungsform wird aus dem Motorstrom I und der Motorspannung U und den bekannten Motorcharakteristiken, d.h. der bekannten Getriebeanordnung die auf das Verdrängungsorgan ausgeübte Kraft berechnet.

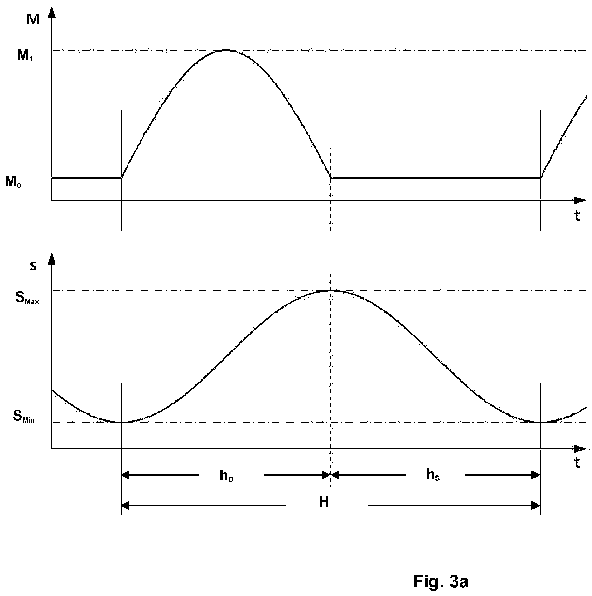

In Figur 3a ist schematisch der zeitliche Verlauf des Drehmomentes (oben) und der Bewegung des Verdrängerelementes (unten) über eine Hubperiode gezeigt.

Die Bewegung des Verdrängerelementes erfolgt im Wesentlichen sinusförmig. Während eines Druckhubes h_{D} bewegt sich der Verdränger von der minimalen Auslenkung S_{Min} bis zur maximalen Auslenkung S_{Max}. Während des sich daran anschließenden Saughubes wird der Verdränger von der maximalen Auslenkung S_{Max} zurück bis zur minimalen Auslenkung S_{Min} bewegt. Die gesamte Hubperiode H setzt sich aus dem Druckhub h_{D} und dem Saughub h_{S} zusammen. Betrachtet man das in Figur 3a oben dargestellte Drehmoment, so erkennt man, dass das Drehmoment sich zwischen einem Grundmoment M₀ und einem Spitzenmoment M₁ bewegt. Nur während des Druckhubes h_{D} weicht das Drehmoment vom Grundmoment M₀ ab. Außerhalb des Druckhubes muss der Motor keine Kraft auf das zu fördernde Medium aufbringen, so dass im Wesentlichen nur das Grundmoment M₀ aufgrund von Reibungsverlusten erforderlich ist. Der Verdränger wird durch ein Federelement zurück in seine Ausgangsposition bewegt.

Der Verlauf des Drehmomentes während des Druckhubes h_{D} ist hier ebenfalls im wesentlichen sinusförmig und hängt von der Getriebecharakteristik ab. Zu Beginn und am Ende des Druckhubes h_{D} ist die aufzubringende Kraft aufgrund der Getriebeübersetzung sehr gering. Dazwischen steigt sie bis zu dem Maximalwert M₁ an.

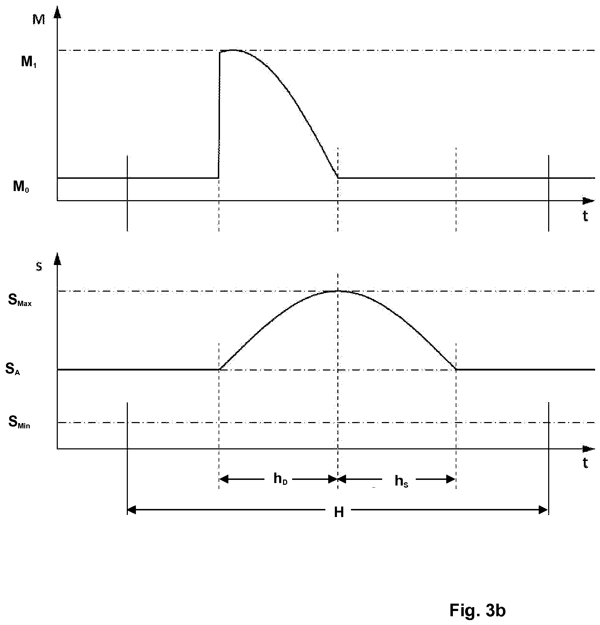

In Figur 3b ist schematisch der zeitliche Verlauf des Drehmomentes (oben) und der Bewegung des Verdrängerelementes (unten) über eine Hubperiode gezeigt, wobei hier der Fall gezeigt ist, in dem nur ein Teilhub durchgeführt wird.

Kann das Verdrängungselement nicht mehr bis zur minimalen Auslenkung S_{Min} zurückbewegt werden, sei es, weil ein einstellbarer Anschlag die Hublänge begrenzt oder weil die Hublänge aus anderen nicht vorhersehbaren Gründen begrenzt ist, so wird nur ein Teilhub durchgeführt. In der in Figur 3b unten gezeigten schematischen Darstellung der Verdrängerbewegung erkennt man, dass sich die Auslenkung nun zwischen einer Auslenkung S_{A} und der Maximalauslenkung S_{Max} bewegt. Folglich ist der Druckhub h_{D} und der Saughub h_{S} im Vergleich zu den Druck- und Saughüben von Figur 3a deutlich reduziert.

Man erkennt weiterhin in Figur 3b oben, dass sich der zeitliche Verlauf des Drehmomentes deutlich von dem in Figur 3a gezeigten Verlauf unterscheidet. Folglich kann man aus dem Momentverlauf Rückschlüsse auf die tatsächlich ausgeführte Hublänge ziehen und diese mit einer vorgegebenen Soll-Hublänge vergleichen. Sollte die tatsächliche Hublänge mit der Soll-Hublänge nicht übereinstimmen, so kann in einer bevorzugten Ausführungsform durch Änderung des Motorstromes und/oder der Motorspannung die tatsächliche Hublänge an die Soll-Hublänge angepasst werden. Doch auch dann, wenn eine solche Anpassung an die Soll-Hublänge nicht gewünscht oder nicht möglich ist, so kann durch das erfindungsgemäße Vorgehen die tatsächliche Hublänge bestimmt werden, daraus das Dosiervolumen errechnet werden und dieses mit dem Soll-Dosiervolumen verglichen werden. Gegebenenfalls muss dann die Drehzahl des Motors erhöht werden, um das reduzierte Dosiervolumen pro Hub zu kompensieren.

Weiterhin ist eine Blockadeerkennung möglich. Während bei den bekannten Ausführungsformen ein Positionssensor die Position des Verdrängungsorgans erfassen mußte, woraus dann eine unter Umständen vorliegende Blockade abgeleitet werden konnte, ist bei der erfindungsgemäßen Ausführungsform vorgesehen, dass die Pumpe abgeschaltet wird, wenn das von dem Motor aufzubringende Drehmoment einen vorbestimmten Grenzwert überschreitet. Die erfindungsgemäße Blockadeabschaltung kann daher unter Umständen die Beschädigung des Motors verhindern.

Es versteht sich, dass die Blockadeerkennung auch derart erfolgen kann, dass eine Blockade bei Überschreiten des vorbestimmten Grenzwertes zu einem bestimmten Zeitpunkt oder über einen Zeitraum, der länger als ein vorbestimmter Zeitraum ist, angenommen wird. Weiterhin ist es möglich, den vorbestimmten Grenzwert aus der Exzenterstellung abzuleiten, d.h. den vorbestimmten Grenzwert zeitlich veränderlich auszugestalten.

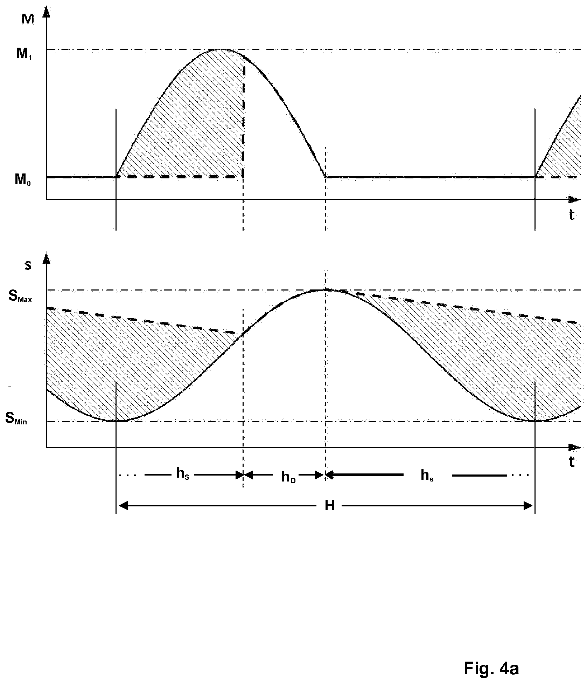

In gleicher Weise kann ein unvollständiger Saughub bestimmt werden. In Figur 4a ist schematisch der zeitliche Verlauf des Drehmomentes (oben) und der Verdrängerbewegung (unten) dargestellt. Die durchgezogene Linie entspricht dem in Figur 3a gezeigten Verlauf. Kann nun aus irgendwelchen Gründen beim Saughub nicht genügend Fördermedium in den Förderraum nachströmen, so wird das Verdrängungsorgan dem Exzenter nicht folgen können, sondern von diesem abheben. Diese Situation ist in Figur 4a mit gestrichelter Linie dargestellt. Anstatt der Exzenterbewegung zu folgen, füllt sich die Dosierkammer nur allmählich, so dass der Exzenter sich bereits wieder in Richtung seiner maximalen Auslenkung bewegt, bevor die Dosierkammer gefüllt ist. Dies hat zur Folge, dass sich der Druckhub h_{D} verkürzt, wie in Figur 4a gezeigt ist. Folglich ändert sich auch der Drehmomentverlauf, wie ebenfalls mit gestrichelter Linie dargestellt ist.

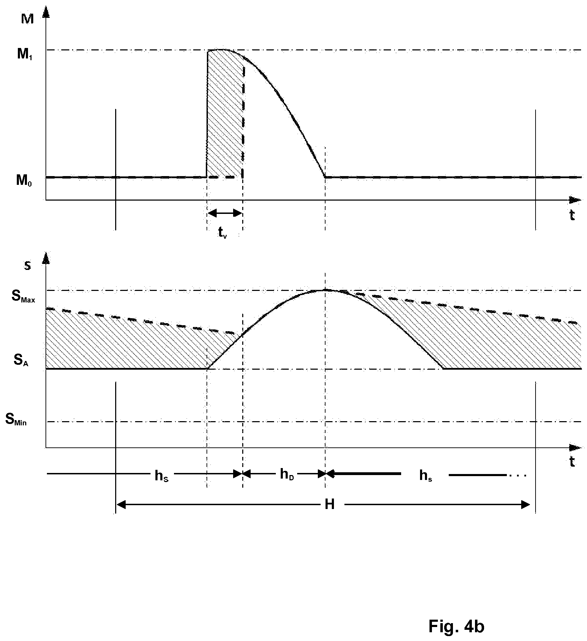

In Figur 4b ist die gleiche Situation im Falle eines Teilhubes gezeigt. Aus der zeitlichen Verschiebung t_{V} kann abgeleitet werden, dass ein unvollständiger Saughub stattgefunden hat, und es können gegebenenfalls entsprechende Maßnahmen ergriffen werden, um die Dosierleistung dennoch aufrecht zu erhalten oder es kann ein entsprechendes Fehlersignal ausgegeben werden.

Das erfindungsgemäße Verfahren ermöglicht des weiteren eine Schlupferfassung innerhalb des Hubweges und gegebenenfalls die sofortige Ausregelung ebenfalls innerhalb einer Hubperiode. Während üblicherweise die Drehzahl über eine Messung des Hubes bestimmt wird und gegebenenfalls die Drehzahl für den Gesamthub angepasst wird, ist bei der bevorzugten Ausführungsform vorgesehen, dass das Drehmoment bei zunehmendem Schlupf innerhalb eines Druck- und Saughubes angepasst wird.

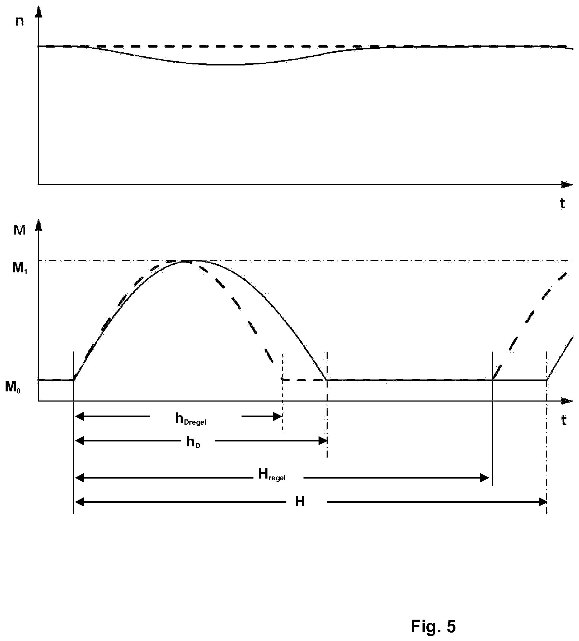

Zur Verdeutlichung ist in Figur 5 die Drehzahl über der Zeit für bekannte Motoren (durchgezogene Linie) und für einen mit im erfindungsgemäßen Verfahren geregelten Motor (gestrichelte Line) gezeigt. Während die Drehzahl aufgrund der erhöhten Last bei den bekannten Motoren innerhalb einer Periodendauer periodisch abfällt, bleibt bei der erfindungsgemäßen Regelung die Drehzahl konstant. Um dies zu erreichen, muss das Motordrehmoment zum geeigneten Zeitpunkt innerhalb eines Hubes variiert werden.

Durch diese Maßnahme wird die Länge des Druckhubes reduziert und auch die Länge der Hubperiode auf ihren idealen Wert eingestellt, während sich durch die Verringerung der Drehzahl die Länge des Druckhubes und die Hubperiode verlängern würden.

Durch das erfindungsgemäße Verfahren ist es daher möglich, selbst bei hoher Last, die sonst zu einer Verringerung der Drehzahl führen würde, die Dosierleistung konstant zu halten.

Das erfindungsgemäße Verfahren erlaubt ebenso den hydraulischen Druck, d.h. den Arbeitsdruck, aus dem Drehmoment abzuleiten. So ist es beispielsweise möglich, das vom Motor erzeugte Drehmoment zu bestimmen und mit einem Soll-Drehmoment zu vergleichen und bei einer Abweichung zwischen Ist-Drehmoment und Soll-Drehmoment von z. B. mehr als 30 % die Pumpe anzuhalten, um eine Überlast zu verhindern und damit den Antrieb vor Selbstzerstörung zu schützen.

Wie bereits ausgeführt, kommt es beim Druck- und Saughub zu einer Verbiegung der Verdrängungsmembran, so dass das Dosiervolumen vom Arbeitsdruck abhängt.

Wenn das erfindungsgemäße Verfahren die Bestimmung des Arbeitsdruckes aus dem Motorkerngrößen erlaubt, kann der Dosierfehler in Abhängigkeit von dem ermittelten Arbeitsdruck korrigiert werden. Ein weitere Vorteil des erfindungsgemäßen Verfahrens besteht darin, dass prinzipielle jede beliebige Bewegungskurve des Verdrängungsorgans eingestellt werden kann. So kann beispielsweise das Dosieren und Ansaugen mit einer konstanten, herabgesetzten Geschwindigkeit erfolgen, indem die Geschwindigkeitsvariation aufgrund des Auslenkwinkels des Exzenters kompensiert wird, wodurch eine gleichförmige Dosierung erfolgt und die notwendige Spitzenleistung des Motors reduziert wird. Zudem kann eine elektronische Ansaughilfe bei erstmaliger Befüllung der Ansaugleitung und des Dosierkopfes (Inbetriebnahme) verwirklicht werden, wenn beispielsweise der Motor im Pendelhub betrieben wird und beim Ansaugen die volle Hublänge ausgeführt wird.

Weiterhin ist es möglich durch vorausschauende Anpassung der Motoransteuergrößen entlang des Hubwegs den Motor zu jedem Zeitpunkt bedarfsorientiert anzusteuern, da der Drehmomentanstieg aufgrund des Exzenters bekannt ist. Dadurch kann der Motor energiesparender betrieben werden.

Es ist bekannt, dass Kavitation auftreten kann, die zu einem unvollständigen Ansaugen und einem erhöhten Materialverschleiß, z. B. in den Ventilen führt. Durch die beschriebene Auswertung des Kraftverlaufs und/oder des Bewegungsverlaufs kann die Kavitation im Saughub erkannt werden und es können sofort Gegenmaßnahmen, wie z. B. das Drosseln der Ansauggeschwindigkeit ergriffen werden.

### Bezugszeichenliste

- 1: Exzentergehäuse
- 2: Antriebsmotor
- 4: Bodenplatte
- 7: Verstellorgan
- 8: Hubverstellbolzen
- 10: Steuerleitungen
- 11: Untersetzungsgetriebe
- 12: Dosierkopf
- 13: Membran
- 14: Einlaßventil
- 15: Auslaßventil
- 16: Dosierraum
- 17: Exzenterwelle
- 18: Längsachse
- 19: Schubstange
- 20: Schubbügel
- 22: Exzenterträger
- 23: Druckfeder
- 24: Lagescheibe
- 27: Gleitbuchse
- 29: Elektronikgehäuse

## Patentansprüche

1. Verfahren zum Regeln einer Dosierpumpe mit einem Antriebsmotor (2) mit einer vom Motor angetriebenen Welle und einem in einem Dosierkopf (12) angeordneten Verdrängungsorgan, bei der die Drehbewegung der Welle in eine oszillierende Bewegung des Verdrängungsorgans umgesetzt wird, wobei das Verdrängungsorgan in Zusammenwirken mit einem Auslass- und Einlassventil (14, 15) in abwechselnder Folge zu einem Pumphub und einem Ansaughub und damit zu einer Förderung eines Dosiermediums führt, bei dem
wenigstens eine Motorbetriebsgröße gemessen wird,
**dadurch gekennzeichnet, dass**
zumindest eine Regelgröße aus der wenigstens einen gemessenen Motorbetriebsgröße berechnet wird, die zumindest eine Regelgröße mit einer vorbestimmten Führungsgröße verglichen wird und
ein von dem Ergebnis des Vergleichs abhängendes Vergleichssignal ausgegeben wird, welches als Regelsignal verwendet wird.

2. Verfahren nach Anspruch 1, **dadurch gekennzeichnet, dass** als Regelgröße das Ist-Drehmoment M_{Ist} und gegebenenfalls der magnetische Ist-Fluss Φ_{Ist} des Motors, vorzugsweise eines Asynchronmotors, berechnet wird.

3. Verfahren nach einem der Ansprüche 1 bis 2, **dadurch gekennzeichnet, dass** als Regelgröße die Ist-Motordrehzahl, vorzugsweise mehrmals, besonders bevorzugt mindestens fünf mal während einer Motorumdrehung gemessen oder aus den Motorbetriebsgrößen, vorzugsweise aus dem Ist-Drehmoment M_{Ist} und dem magnetischen Ist-Fluss Φ_{Ist} des Motors, berechnet wird und die Differenz zwischen der Ist-Motordrehzahl und einer vorbestimmten Soll-Motordrehzahl als Vergleichssignal ausgegeben wird und das Vergleichssignal als Regelsignal zur Anpassung von Motorstrom I und/oder Motorspannung U verwendet wird, um die Ist-Motordrehzahl an die Soll-Motordrehzahl anzugleichen.

4. Verfahren nach einem der Ansprüche 1 bis 3, **dadurch gekennzeichnet, dass** eine Dosierpumpe geregelt wird, die ein Getriebe zum Umsetzen einer rotatorischen Bewegung in eine translatorische Bewegung aufweist, welches die angetriebene Welle des Motors mit dem Verdrängungsorgan verbindet, wobei das Getriebe vorzugsweise einen Exzenter aufweist, welcher auf einem mit dem Verdrängungsorgan verbundenen Kontaktelement abläuft, so dass durch Drehen der Welle der Exzenter das Verdrängungsorgan in Richtung des Dosierkopfes bewegt und dadurch einen Pumphub durchgeführt werden kann.

5. Verfahren nach einem der Ansprüche 1 bis 4, **dadurch gekennzeichnet, dass** als Führungsgröße eine vorbestimmte Soll-Motordrehzahl verwendet wird, wobei die Soll-Motordrehzahl eine periodische Funktion mit einer Periodendauer, die der Periodendauer des Verdrängungsorgans entspricht, ist.

6. Verfahren nach Anspruch 5, **dadurch gekennzeichnet, dass** die Soll-Motordrehzahl unter Berücksichtigung der Getriebecharakteristik derart festgelegt wird, dass die translatorische Bewegung im wesentlichen mit konstanter Geschwindigkeit erfolgt.

7. Verfahren nach einem der Ansprüche 5 bis 6, **dadurch gekennzeichnet, dass** als Regelgröße die Ist- Motormagnetisierung, vorzugsweise mehrmals, besonders bevorzugt mindestens fünf mal während einer Motorumdrehung, aus dem Ist-Drehmoment M_{Ist} und gegebenenfalls aus weiteren Motorbetriebsgrößen und/oder bekannten Motorcharakteristiken berechnet wird und als Führungsgröße eine vorbestimmte Soll-Motormagnetisierung gewählt wird und die Differenz zwischen der Regelgröße und der Führungsgröße als Vergleichssignal ausgegeben wird und das Vergleichssignal als Regelsignal zur Anpassung von Motorstrom I und/oder Motorspannung U verwendet wird, um die Ist- Motormagnetisierung an die Soll-Motormagnetisierung anzugleichen, wobei vorzugsweise die Soll-Motormagnetisierung eine periodische Funktion mit einer Periodendauer, die der Periodendauer des Verdrängungsorgans entspricht, ist.

8. Verfahren nach einem der Ansprüche 1 bis 7, **dadurch gekennzeichnet, dass** die Dosierpumpe ein Verdrängungsorgan mit einer zumindest teilweise elastischen Membran aufweist, dass als Regelgröße die Dosiermenge aus dem zeitlichen Verlauf des Ist-Drehmomentes M_{Ist} und gegebenenfalls dem magnetischen Ist-Fluss Φ_{Ist} des Motors unter Berücksichtigung weiterer Motorcharakteristiken berechnet wird, wobei der aufgrund der Durchbiegung der elastischen Membran zu erwartende Einfluss auf die Dosiermenge berücksichtigt wird und die Differenz zwischen der Ist-Dosiermenge und einer vorbestimmte Soll-Dosiermenge als Vergleichssignal ausgegeben wird und als Regelsignal zur Anpassung von Motorstrom I und/oder Motorspannung U verwendet wird, um die Ist-Dosiermenge an die Soll- Dosiermenge anzugleichen.

9. Verfahren nach einem der Ansprüche 1 bis 8, **dadurch gekennzeichnet, dass** als Regelgröße eine Ist-Hublänge des Verdrängungsorgans aus dem Ist-Drehmoment M_{Ist} und gegebenenfalls dem magnetischen Ist-Fluss Φ_{Ist} des Motors berechnet wird und die Differenz zwischen der Ist-Hublänge und einer vorbestimmten Soll-Hublänge als Vergleichssignal ausgegeben wird, wobei das Vergleichssignal als Regelsignal zur Anpassung von Motorstrom I und/oder Motorspannung U verwendet wird, um die Ist-Hublänge an die Soll-Hublänge anzugleichen.

10. Verfahren nach einem der Ansprüche 1 bis 9, **dadurch gekennzeichnet, dass** als Regelgröße die Schubstangenposition aus den gemessenen Motorbetriebsgrößen und gegebenenfalls weiteren bekannten Motorcharakteristiken berechnet wird.

11. Verfahren nach einem der Ansprüche 1 bis 10, **dadurch gekennzeichnet, dass** als Motorbetriebsgröße eine Motorspannung U oder ein Motorstrom I gemessen wird.

12. Dosierpumpe mit einem Antriebsmotor (2) mit einer vom Motor angetriebenen Welle und einem in einem Dosierkopf (12) angeordneten Verdrängungsorgan, bei der mittels eines Getriebes die Drehbewegung der Welle in eine oszillierende Bewegung des Verdrängungsorgans umgesetzt wird, wobei das Verdrängungsorgan in Zusammenwirken mit einem Auslass- und Einlassventil (14, 15) in abwechselnder Folge zu einem Pumphub und einem Ansaughub und damit zu einer Förderung eines Dosiermediums führt, **dadurch gekennzeichnet, dass** die Dosierpumpe eine Regelvorrichtung aufweist, die so konfiguriert ist, um die Verfahrensschritte des Verfahrens nach einem der Ansprüche 1 bis 11 durchzuführen.

13. Dosierpumpe nach Anspruch 12, **dadurch gekennzeichnet, dass** die Pumpe derart eingerichtet ist, dass sie im Pendelhubbetrieb arbeiten kann, d. h. die Motordrehrichtung zur Beendigung eines Ansaughubes oder Pumphubes invertieren kann.

## Claims

1. A method of regulating a metering pump comprising a drive motor (2) having a shaft driven by the motor and a displacement member arranged in a metering head (12), in which the rotary movement of the shaft is converted into an oscillating movement of the displacement member, wherein the displacement member, interacting with an outlet and inlet valve (14, 15) in alternate sequence, leads to a pump stroke (pressure stroke) and an intake stroke and thus to delivery of a medium to be metered,
wherein
at least one motor operating parameter is measured,
**characterised in that**
at least one regulating parameter is calculated from the at least one measured motor operating parameter,
the at least one regulating parameter is compared to a predetermined guide parameter, and a comparison signal dependent on the result of the comparison is outputted, which is used as a regulating signal.

2. A method according to claim 1 **characterised in that** the actual torque M_{ACTUAL} and optionally the magnetic actual flux Φ_{ACTUAL} of the motor, preferably an asynchronous motor, is calculated as the regulating parameter.

3. A method according to one of claims 1 to 2 **characterised in that** as the regulating parameter the actual motor speed is measured preferably a plurality of times, particularly preferably at least five times, during a motor revolution, or is calculated from the motor operating parameters, preferably from the actual torque M_{ACTUAL} and the magnetic actual flux Φ_{ACTUAL} of the motor, and the difference between the actual motor speed and a predetermined reference motor speed is outputted as the comparison signal and the comparison signal is used as a regulating signal for adaptation of motor current I and/or motor voltage U to adapt the actual motor speed to the reference motor speed.

4. A method according to one of claims 1 to 3 **characterised in that** a metering pump is regulated, having a transmission for conversion of a rotary movement into a translatory movement, which connects the driven shaft of the motor to the displacement member, wherein the transmission preferably has an eccentric which runs on a contact element connected to the displacement member so that by rotation of the shaft the eccentric moves the displacement member in the direction of the metering head and thereby can perform a pump stroke.

5. A method according to one of claims 1 to 4 **characterised in that** a predetermined reference motor speed is used as the guide parameter wherein the reference motor speed is a periodic function having a period duration corresponding to the period duration of the displacement member.

6. A method according to claim 5 **characterised in that** the reference motor speed is established having regard to the transmission characteristic in a such a way that the translatory movement is effected substantially at a constant speed.

7. A method according to one of claims 5 to 6 **characterised in that** as the regulating parameter the actual motor magnetisation is calculated, preferably a plurality of times, particularly preferably at least five times during a motor revolution, from the actual torque M_{ACTUAL} and optionally from further motor operating parameters and/or known motor characteristics, and a predetermined reference motor magnetisation is selected as the guide parameter and the difference between the regulating parameter and the guide parameter is outputted as the comparison signal and the comparison signal is used as the regulating signal for the adaptation of motor current I and/or motor voltage U to adapt the actual motor magnetisation to the reference motor magnetisation, wherein preferably the reference motor magnetisation is a periodic function with a period duration corresponding to the period duration of the displacement member.

8. A method according to one of claims 1 to 7 **characterised in that** the metering pump has a displacement member with an at least partially elastic diaphragm, the metering amount is calculated as the regulating parameter from the time variation in the actual torque M_{ACTUAL} and optionally the magnetic actual flux Φ_{ACTUAL} of the motor having regard to further motor characteristics, wherein the influence to be expected by virtue of flexing of the elastic diaphragm on the metering amount is taken into consideration and the difference between the actual metering amount and a predetermined reference metering amount is outputted as the comparison signal and used as the regulating signal for the adaptation of motor current I and/or motor voltage U to adapt the actual metering amount to the reference metering amount.

9. A method according to one of claims 1 to 8 **characterised in that** an actual stroke length of the displacement member is calculated as the regulating parameter from the actual torque M_{ACTUAL} and optionally the magnetic actual flux Φ_{ACTUAL} and the difference between the actual stroke length and a predetermined reference stroke length is outputted as the comparison signal, wherein the comparison signal is used as the regulating signal for the adaptation of motor current I and/or motor voltage U to adapt the actual stroke length to the reference stroke length.

10. A method according to one of claims 1 to 9 **characterised in that** the thrust rod position is calculated as the regulating parameter from the measured motor operating parameters and optionally further known motor characteristics.

11. A method according to one of claims 1 to 10 **characterised in that** a motor voltage U or a motor current I is measured as motor operating parameter.

12. A metering pump comprising a drive motor (2) having a shaft driven by the motor and a displacement member arranged in a metering head (12), in which the rotary movement of the shaft is converted into an oscillating movement of the displacement member by means of a transmission, wherein the displacement member, interacting with an outlet and inlet valve (14, 15) in alternate sequence, leads to a pump stroke (pressure stroke) and an intake stroke and thus to delivery of a medium to be metered, **characterised in that** the metering pump has a regulating device for carrying out a method according to one of claims 1 to 11.

13. A metering pump according to claim 12 **characterised in that** the pump is so adapted that it can operate in the pendulum stroke mode of operation, that is to say the direction of rotation of the motor can invert to end an intake stroke or a pump stroke.

## Revendications

1. Procédé de réglage d'une pompe de dosage avec un moteur d'entraînement (2) avec un arbre entraîné par le moteur et avec un organe de refoulement disposé dans une tête de dosage (12), dans laquelle pompe le mouvement de rotation de l'arbre est transformé en un mouvement oscillant de l'organe de refoulement, l'organe de refoulement produisant, en coopération avec une valve de sortie et une valve d'entrée (14, 15), alternativement une course de pompage et une course d'aspiration et ainsi un transport d'un fluide doseur, selon lequel au moins une grandeur de fonctionnement de moteur est mesurée,
**caractérisé en ce que**
au moins une grandeur de régulation est calculée à partir de ladite au moins une grandeur de fonctionnement de moteur,
laquelle au moins une grandeur de régulation est comparée à une grandeur de consigne prédéterminée et
un signal de comparaison dépendant du résultat de la comparaison est émis qui est utilisé comme signal de régulation.

2. Procédé selon la revendication 1, **caractérisé en ce qu'**il est calculé comme grandeur de régulation, le couple réel Mᵢₛₜ et, le cas échéant, le flux magnétique réel Φᵢₛₜ du moteur, de préférence un moteur asynchrone.

3. Procédé selon la revendication 1 à 2, **caractérisé en ce que** la vitesse de rotation réelle de moteur comme grandeur de régulation est mesurée ou calculée à partir des grandeurs de fonctionnement de moteur, de préférence à partir du couple réel Mᵢₛₜ et du flux magnétique réel Φᵢₛₜ, de préférence plusieurs fois, de manière particulièrement préférée au moins cinq fois, pendant un tour moteur et que la différence entre la vitesse de rotation réelle de moteur et une vitesse de rotation de consigne de moteur prédéterminée est émise comme signal de comparaison et que le signal de comparaison est utilisé comme signal de régulation pour adapter le courant I du moteur et/ou la tension U du moteur afin d'ajuster la vitesse de rotation réelle de moteur sur la vitesse de rotation de consigne de moteur.

4. Procédé selon l'une des revendications 1 à 3, **caractérisé en ce qu'**une pompe de dosage est régulée qui comprend une transmission pour transformer un mouvement de rotation en un mouvement de translation et qui relie l'arbre entraîné du moteur à l'organe de refoulement, la transmission comprenant de préférence un excentrique qui évolue sur un élément de contact relié à l'organe de refoulement, si bien que, par la rotation de l'arbre, l'excentrique déplace l'organe de refoulement en direction de la tête de dosage et que, par cela, une course de pompage puisse être effectuée.

5. Procédé selon l'une des revendications 1 à 4, **caractérisé en ce qu'**il est utilisé comme grandeur de référence, une vitesse de rotation de consigne de moteur, la vitesse de rotation de consigne de moteur étant une fonction périodique avec une durée des périodes qui correspond à la durée des périodes de l'organe de refoulement.

6. Procédé selon la revendication 5, **caractérisé en ce que** la vitesse de rotation de consigne de moteur est déterminée, en tenant compte des caractéristiques de la transmission, de façon telle que le mouvement de translation soit effectué avec une vitesse sensiblement constante.

7. Procédé selon l'une des revendications 5 à 6, **caractérisé en ce qu'**il est calculé comme grandeur de régulation, la magnétisation réelle de moteur, de préférence à partir du couple réel Mᵢₛₜ et, le cas échéant, à partir d'autres caractéristiques de fonctionnement de moteur et/ou de caractéristiques de moteur connues, de préférence plusieurs fois, de manière particulièrement préférée au moins cinq fois, pendant un tour moteur et qu'une magnétisation de consigne de moteur prédéterminée est choisie comme grandeur de référence et que la différence entre la grandeur de régulation et la grandeur de référence est émise comme signal de comparaison et que le signal de comparaison est utilisé comme signal de régulation pour adapter le courant I du moteur et/ou la tension U du moteur afin d'ajuster la magnétisation réelle de moteur sur la magnétisation de consigne de moteur, la magnétisation de consigne de moteur étant de préférence une fonction périodique avec une durée des périodes qui correspond à la durée des périodes de l'organe de refoulement.

8. Procédé selon l'une des revendications 1 à 7, **caractérisé en ce que** la pompe de dosage comprend un organe de refoulement avec une membrane au moins partiellement élastique, **en ce que** la quantité de dosage est calculée comme grandeur de régulation à partir de l'évolution dans le temps du couple réel Mᵢₛₜ et, le cas échéant, du flux magnétique réel Φᵢₛₜ du moteur, en tenant compte d'autres caractéristiques de moteur, l'influence à laquelle il faut s'attendre, de la flexion de la membrane élastique sur la quantité de dosage étant prise en compte et la différence entre la quantité réelle de dosage et une quantité de consigne de dosage prédéterminée étant émise comme signal de comparaison et étant utilisée comme signal de régulation pour adapter le courant I du moteur et/ou la tension U du moteur afin d'ajuster la quantité réelle de dosage sur la quantité de consigne de dosage.

9. Procédé selon l'une des revendications 1 à 8, **caractérisé en ce qu'**une course réelle de l'organe de refoulement est calculée comme grandeur de régulation à partir du couple réel Mᵢₛₜ et, le cas échéant, du flux magnétique réel Φᵢₛₜ du moteur, et que la différence entre la course réelle et une course de consigne prédéterminée est émise comme signal de comparaison, le signal de comparaison étant utilisée comme signal de régulation pour adapter le courant I du moteur et/ou la tension U du moteur afin d'ajuster la course réelle sur la course de consigne.

10. Procédé selon l'une des revendications 1 à 9, **caractérisé en ce que** la position de la tige poussoir est calculée à partir des grandeurs de fonctionnement de moteur mesurées et, le cas échéant, à partir d'autres caractéristiques de moteur connues.

11. Procédé selon l'une des revendications 1 à 10, **caractérisé en ce qu'**il est mesuré comme grandeur de fonctionnement de moteur, une tension U du moteur ou un courant I du moteur.

12. Pompe de dosage avec un moteur d'entraînement (2) avec un arbre entraîné par le moteur et avec un organe de refoulement disposé dans une tête de dosage (12), dans laquelle pompe le mouvement de rotation de l'arbre est transformé en un mouvement oscillant de l'organe de refoulement, l'organe de refoulement produisant, en coopération avec une valve de sortie et une valve d'entrée (14, 15), alternativement une course de pompage et une course d'aspiration et ainsi un transport d'un fluide doseur, **caractérisée en ce que** la pompe de dosage comprend un dispositif de régulation qui est configuré de façon à mettre en oeuvre les étapes du procédé selon l'une des revendications 1 à 11.

13. Pompe de dosage selon la revendication 12, **caractérisée en ce que** la pompe est agencée de façon qu'elle puisse fonctionner en mode de mouvement pendulaire, c'est-à-dire qu'elle puisse inverser le sens de rotation du moteur pour terminer une course d'aspiration ou une course de pompage.
